# EUROPÄISCHE PATENTSCHRIFT

(11) **EP 2 428 956 B1**
(45) Veröffentlichungstag und Bekanntmachung des Hinweises auf die Patenterteilung: **06.11.2019**
(21) Anmeldenummer: 10176694.7
(22) Anmeldetag: 14.09.2010
(51) Int. Cl.: G11B 27/034, G11B 27/10, G11B 27/32, G06K 9/00

(54) **Verfahren zur Erstellung von Filmsequenzen**
Method for creating film sequences
Procédé d'établissement de séquences de film

(43) Veröffentlichungstag der Anmeldung: 14.03.2012
(73) Patentinhaber: teravolt GmbH, 20357 Hamburg (DE); Sporterpilot, 2950 Vedbaek (DK)
(72) Erfinder: Koch, Oliver, 20255 Hamburg (DE); Fröhlich, Tobias, 20144 Hamburg (DE)
(74) Vertreter: Eisenführ Speiser

(56) Entgegenhaltungen:
- EP-A2- 1 265 154
- EP-A2- 1 765 011
- WO-A1-2005/124686
- US-A1- 2004 130 567
- US-A1- 2008 138 029
- US-A1- 2009 034 932
- US-A1- 2010 005 485

## Beschreibung

Die Erfindung betrifft ein Verfahren zur Bereitstellung von Filmsequenzen aus einem elektronischen Filmquellmaterial, mit den Schritten des Bereitstellens einer Liste von unterschiedlichen Typen von Ereigniskennungen, wobei jeder Typ ein bestimmtes Ereignis oder einen bestimmten Aspekt eines Ereignisses beschreibt und die Ereignisse bzw. Aspekte der Ereignisse optionale Handlungen sind, die auf dem Filmquellmaterial dokumentiert sein können, des Auswertens des Filmquellmaterials durch Zuordnen von jeweils unterschiedlichen Ereigniskennungen zu entsprechend unterschiedlichen Ereignissen, die auf dem elektronischen Filmquellmaterial abgebildet sind, des Abspeicherns der zugeordneten Ereigniskennungen in einem Datenformat, welches jeder Ereigniskennung eine Filmquellmaterialbezeichnung und eine Zeitangabe, die der jeweiligen Ereigniskennung den Zeitpunkt zu dem das dieser Ereigniskennung entsprechende Ereignis auf dem Filmquellmaterial abgebildet ist, zuordnet und des Auswählens eines bestimmten Ereigniskennungshighlights, welches einem in der bereitzustellenden Filmsequenz darzustellendem Ereignis entspricht.

Die Auswertung von Filmquellmaterial und Bereitstellung relevanter Sequenzen aus solchem Filmquellmaterial stellt mit der zunehmenden Menge an Filmquellmaterial, die einerseits aufgrund einer Vielzahl von unterschiedlichen Aufnahmestandpunkten und - geräten, andererseits durch eine zunehmende Datenmenge aufgrund höherer Bildqualität verursacht sein kann, eine zunehmende technische Herausforderung dar. Insbesondere im Bereich der aktuellen Berichterstattung stellt sich hier das Problem, aus Filmquellmaterial, welches einen langen Zeitraum eines Vorgangs erfasst und wiedergibt, insbesondere einen gesamten Vorgang, wie beispielsweise eine politische Veranstaltung wie eine Parlamentsrede, eine sportliche Veranstaltung, wie ein Fußballspiel oder eine Überwachung eines Sicherheitsbereichs oder einer Maschine oder Anlage, gezielt solche Ausschnitte in nachvollziehbarer Weise auszuwählen, welche für ein schnelles Verständnis des Vorgangs und der innerhalb dieses Vorgangs aufgetretenen, für dieses Verständnis relevanten Ereignisse vorzunehmen.

Es ist grundsätzlich bekannt, dass Filmquellmaterial in vollem Umfang bereitzustellen und zusätzlich zum normalen Abspielmodus die Möglichkeit bereitzustellen, innerhalb des Filmquellmaterials eine beschleunigte Abspielweise, beispielsweise in Form einer Zeitrafferfunktion oder Vorspulfunktion zu ermöglichen. Hierdurch kann ein Benutzer grundsätzlich selbst bei der Betrachtung des Filmquellmaterials Einfluss auf die darzustellenden Ereignisse nehmen, indem er selbst manuell vorspult und bei entsprechenden relevant erscheinenden Ereignissen in den normalen Abspielmodus schaltet. Allerdings stellt dies eine für den Benutzer unkomfortable Betrachtungsweise dar und beinhaltet zudem die unerwünschte Möglichkeit, dass relevante Ereignisse während des schnellen Vorspulens übersehen werden und daher nicht betrachtet werden.

Es ist aus diesem Grund auch bekannt, Filmquellmaterial als professionelle Dienstleistung einer vollständigen Betrachtung zu unterziehen und hierbei bestimmte, relevant erscheinende Ereignisse hinsichtlich ihres Anfangs- und Endzeitpunktes zu definieren und die solcherart definierten Ereignisse als zusammengefasste Wiedergabe zusammenzuschneiden. Auf diese Weise kann durch einmalige Betrachtung des gesamten Filmquellmaterials eine Ereignisfolge erstellt werden, die für andere Benutzer es ermöglicht, die wesentlichen Ereignisse des auf dem Filmquellmaterial dokumentierten Vorgangs in kurzer Zeit zu betrachten. Diese Vorgangsweise ist die typische Art der journalistischen Aufbereitung von Filmquellmaterial und zeichnet sich dadurch aus, dass eine persönliche journalistische Dienstleistung am Filmquellmaterial vollzogen wird, indem die relevanten Ereignisse aufgrund einer persönlich-qualitativen Bewertung des Journalisten ausgewählt werden und dann zu einer Berichterstattung zusammengeschnitten werden. Zwar wird durch diese Vorgehensweise in der Regel eine gute Möglichkeit bereitgestellt, den auf dem Filmquellmaterial dokumentierten Vorgang hinsichtlich der darauf wiedergegebenen herausragenden Ereignisse umfassend zu betrachten. Diese Art der Betrachtung hat jedoch einen stark subjektiven Einfluss in Gestalt der Auswahl durch den Journalisten und ermöglicht es dem Betrachter nicht, ihn persönlich interessierende Ereignisse aus dem Filmquellmaterial zu betrachten, wenn diese nicht auch vom Journalisten in die Berichterstattung hineingeschnitten worden sind.

Das Dokument EP 1765011 offenbart ein Verfahren zur Bereitstellung einer Zusammenfassung von Videodaten.

Der Erfindung liegt die Aufgabe zugrunde, ein Verfahren bereitzustellen, mit dem in einer schnellen und zugleich individualisierten Weise aus einem Filmquellmaterial, welches einen Gesamtvorgang beschreibt, bestimmte Ereignisse zu betrachten.

Diese Aufgabe wird erfindungsgemäß mit einem Verfahren nach Anspruch 1 gelöst.

Erfindungsgemäß wird ein Verfahren vorgeschlagen, welches auf einem Filmquellmaterial, welches gemäß der eingangs beschriebenen Vorgehensweise ausgewertet ist, aufsetzt. Dabei ist zu verstehen, dass die Auswertung sowohl in einer manuellen Weise erfolgen kann, indem Filmquellmaterial durch eine auswertende Person entsprechende Ereigniskennungen zu entsprechenden Ereignissen zugeordnet werden, was beispielsweise durch Eintragen von Kennungen in einer parallel zum Filmquellmaterial abgespeicherten Zeittabelle erfolgen kann. Ebenso kann die Zuordnung der Kennungen jedoch auch in einer automatisierten Weise durch eine Bilderkennung erfolgen, indem bestimmte, durch die Bildauswertung eines oder mehrerer aufeinander folgender Bilder des Filmquellmaterials erkennbare Ereignisse mit einer Datenbank verglichen werden, in der eine Mehrzahl von möglichen Ereignissen abgespeichert sind und einer entsprechenden Kennung zugeordnet sind. Bei dieser automatischen Auswertung des Filmquellmaterials kann dann bei Übereinstimmung der auf dem Filmquellmaterial beobachteten Ereignisse mit einem in der Datenbank abgespeicherten Ereignis eine entsprechende Kennung dem Zeitpunkt innerhalb des Filmquellmaterials zugeordnet werden.

Unter einem Zeitpunkt ist im Zusammenhand der Erfindung sowohl eine konkrete Zeitangabe, beispielsweise in Form einer absoluten Uhrzeitangabe oder einer Laufzeitangabe, welche von Beginn des Filmquellmaterials an mit 0 fortlaufend hochzählt, zu verstehen. Ebenso ist unter Zeitpunkt auch ein Zeitintervall, gekennzeichnet durch einen Startzeitpunkt und einen Endzeitpunkt, zu verstehen.

Im Zusammenhang mit der Erfindung ist
- unter einem Vorgang eine Abfolge von Ereignissen in chronologischer Reihenfolge, wie beispielsweise ein gesamtes Fußballspiel,
- unter einem Filmquellmaterial eine bildliche/akustische Dokumentation eines solchen Vorgangs,
- unter einem Ereignis eine innerhalb eines Vorgangs stattfindende Einzelaktion, die sich über einen kurzen oder längeren Zeitraum hinziehen kann,
- unter einer Ereigniskennung eine kodierte oder im Klartext stattfindende Kurzbeschreibung eines Ereignisses, welche dieses Ereignis unverwechselbar von anderen Ereignissen unterschiedlicher Art differenziert,
- unter einem Ereignistyp eine Klassifizierung von Ereignissen, die ein Ereignis übereinstimmender Art beschreibt,
- unter einem Ereignishighlight ein aus der Gesamtheit aller Ereignisse ausgewähltes Ereignis, welches einem besonderen Interesse eines Benutzers entspricht, und
- unter einem Ereigniskennungshighlight eine Ereigniskennung für ein solches ausgewähltes Ereignishighlight
zu verstehen.

Es ist aus der Sportereignisdokumentation bekannt, Ereignissen, die auf einem Filmquellmaterial wiedergegeben sind, eine das Ereignis charakterisierende Kennung zuzuordnen. Diese Zuordnung könnte erfindungsgemäß in automatisierter Weise erfolgen, beispielsweise im Bereich der Gebäude-, Flächen- oder Anlagenüberwachung in Abhängigkeit von Ereignissen, die durch eine Bildauswertung erfassbar sind, beispielsweise Bewegungen, Lichterscheinungen oder dgl. In diesem Fall wird einem entsprechend durch die Bilderfassung identifizierten Ereignis eine entsprechende Kennung zugeordnet, die dieses Ereignis in Bezug auf seinen Zeitpunkt auf dem Filmquellmaterial markiert. In anderen Bereichen wird eine Kennung in solcher Art vorgenommen, dass das Filmquellmaterial durch einen Betrachter vollständig gesichtet wird und dieser den darauf dokumentierten Ereignissen entsprechende Kennungen zuordnet und den Zeitpunkt des Ereignisses der Kennung entsprechend zuweist. Ein Beispiel hierfür ist das im Bereich von Sportereignissen häufig praktizierte Scouting, welches bestimmte Ereignisse, wie einen Torschuss, ein Tor, ein Foul, einen Elfmeter, einen Ballverlust, einen gewonnenen Zweikampf, einen Korbwurf, einen Korberfolg, einen geblockten Wurf, einen Ballabschlag im Golf, einen Ballversenkung im Loch/Bunker/Wasserhindernis, einen Überholvorgang oder Unfall in Motorsportveranstaltungen, einen Ausreißversuch, Zwischensprintsieg, eine Bergankunft, einen Sturz in Radrennveranstaltungen und dgl. mehr als Kennung auf dem Filmquellmaterial einer entsprechenden Zeit zuweist. Dieses so genannte Scouting dient der statistischen Auswertung der einzelnen Sportveranstaltung und ermöglicht es, über einen längeren Zeitraum Aussagen über bestimmte Spieleigenschaften oder Verhaltensweisen einzelner Sportler, Mannschaften aus den so gewonnenen statistischen Daten zu treffen.

Diese Zuordnung könnte erfindungsgemäß in automatisierter Weise erfolgen, beispielsweise im Bereich der Gebäude-, Flächen- oder Anlagenüberwachung in Abhängigkeit von Ereignissen, die durch eine Bildauswertung erfassbar sind, beispielsweise Bewegungen, Lichterscheinungen oder dgl. In diesem Fall wird einem entsprechend durch die Bilderfassung identifizierten Ereignis eine entsprechende Kennung zugeordnet, die dieses Ereignis in Bezug auf seinen Zeitpunkt auf dem Filmquellmaterial markiert. In anderen Bereichen wird eine Kennung in solcher Art vorgenommen, dass das Filmquellmaterial durch einen Betrachter vollständig gesichtet wird und dieser den darauf dokumentierten Ereignissen entsprechende Kennungen zuordnet und den Zeitpunkt des Ereignisses der Kennung entsprechend zuweist

Erfindungsgemäß erfolgt die Erstellung der Filmsequenz, indem eine bestimmte Ereigniskennung ausgewählt wird, welche dasjenige Ereignis beschreibt, welches in der Filmsequenz wiedergegeben wird. Dabei ist zu verstehen, dass bei mehrfachem Auftreten eines der jeweiligen Ereigniskennung entsprechenden Ereignisses auf dem Filmquellmaterial auch diese mehreren Ereignisse in der Filmsequenz nacheinander dargestellt werden können oder eine entsprechende Auswahl der entsprechenden Ereignisse zunächst wiedergegeben wird, um dann, beispielsweise anhand weiterer Kriterien, welche die Ereignisse voneinander differenzieren, eines der Ereignisse für die Filmsequenz auszuwählen.

Die Erfindung geht von der Erkenntnis aus, dass eine für einen Betrachter nachvollziehbare Wiedergabe des Ereignisses in der Filmsequenz in der Regel eine Wiedergabe eines Filmausschnittes erfordert, der neben dem eigentlichen Ereignis auch einen bestimmten Zeitraum vor dem Ereignis und/oder einen bestimmten Zeitraum nach dem Ereignis erfassen muss. Während die Erstreckung dieses zusätzlich darzustellenden Zeitraums bislang im Stand der Technik nur durch entsprechende Auswertung des Filmquellmaterials durch einen Filmjournalisten und Bestimmung der im Zusammenhang mit dem Ereignis relevant erscheinenden Start- und Endzeitpunkte zu einer sinnvollen Filmsequenz für das Ereignis erfolgen konnten, wird dies bei der Erfindung durch eine automatisierte, technische Vorgehensweise gelöst. Zu diesem Zweck ist einer Ereigniskennung, welche das wiederzugebende Ereignis kennzeichnet, ein Einleitungs- und/oder Ausleitungs-Ereigniskennungstyp zugeordnet. Dies kann beispielsweise in Form einer logisch verknüpften Tabelle erfolgen. Anhand eines Vergleichs der Ereigniskennung des wiederzugebenden Ereignisses mit den diesen zugeordneten Einleitungs- bzw. Ausleitungs-Ereigniskennungstyps wird dann innerhalb der zeitlich vor bzw. nach dem ausgewählten Ereignis liegenden Zeitraum auf dem Filmquellmaterial nach diesen entsprechenden Ereigniskennungstypen gesucht. Dabei ist zu verstehen, dass einer Ereigniskennung auch mehrere alternative Einleitungs- bzw. Ausleitungs-Ereigniskennungstypen zugeordnet sein können oder auch Gruppen von Ereigniskennungstypen. Als Beispiel kann für die Anwendung im Bereich der Sportreportage beispielsweise verstanden werden, dass der Ereigniskennung "Tor", welche als Zeitpunkt des Einschlags des Balles im Tor auf der Filmsequenz vermerkt ist, zum einen eine Gruppe von Ereigniskennungen, bestehend aus "Elfmeterschuss", "Foul innerhalb Strafraum" zugeordnet sein kann, um aus diesen Einleitungsereignissen eine sinnvolle Filmsequenz zusammenzusetzen. Weiterhin kann aber auch der Ereigniskennung "Tor" die Kombination der Ereigniskennungen "Kopfball" und "Flankenschuss" oder "Eckenschuss" als Einleitungsereigniskennung zugeordnet sein und andere in der Realität vorkommende Kombinationen von Ereignissen, die zu einem Tor führen können.

In gleicher Weise können als Ausleitungsereigniskennungstypen Ereignisse wie "Torjubel", "Reaktion Torwart" auf dem Filmquellmaterial gesucht werden, um die Filmsequenz zu vervollständigen. Grundsätzlich ist zu verstehen, dass ein Ereignis durch eine Kombination von Einleitungs- und Ausleitungsereignissen zu einer Filmsequenz zusammengesetzt werden kann, manche Ereignisse aber auch lediglich durch eine Einleitung oder eine Ausleitung ergänzt werden müssen.

Mit dem erfindungsgemäßen Verfahren wird es möglich, Filmquellmaterial wesentlich schneller in solcher Weise auszuwerten, dass darauf erkennbare herausragende Ereignisse in Filmsequenzen wiedergegeben werden können. Das erfindungsgemäße Verfahren ermöglicht es einerseits, dass für eine professionell dargebotene Bildberichterstattung, die von einem Journalisten für eine Vielzahl von Zuschauern vorbereitet wird, aus dem Filmquellmaterial durch den Journalisten eine oder mehrere Filmsequenzen erstellt werden, die dann dem Zuschauer in solcherart aufbereiteter Weise angeboten werden. Neben dieser Möglichkeit der Nutzung bietet das erfindungsgemäße Verfahren aber auch die Möglichkeit, dass ein Benutzer selbst aus dem Filmquellmaterial Filmsequenzen erstellt. Insbesondere kann hierdurch eine wesentlich individuellere Betrachtungsweise des Filmquellmaterials ermöglicht werden, indem jeder Benutzer die ihn selbst interessierenden Ereignisse anhand deren Ereigniskennungen auswählt und dann mit dem erfindungsgemäßen Verfahren entsprechend sinnvolle Filmsequenzen in automatisierter Weise erstellt werden. So wird es beispielsweise möglich, dass ein Benutzer lediglich solche Filmsequenzen aus einer Sportberichterstattung auswählt, die einen bestimmten Spieler betreffen, weil den Benutzer insbesondere die Aktionen dieses Spielers interessieren. In diesem Fall kann der Benutzer aus dem Filmquellmaterial nur solche Filmsequenzen automatisiert erstellen lassen, in denen Ereignisse vorkommen, die für den entsprechenden Spieler in der Ereigniskennung vermerkt sind. Das erfindungsgemäße Verfahren stellt dabei eine solcherart arbeitende Auswertemethode von Filmquellmaterial bereit, dass die Bereitstellung der Filmsequenzen in quasi Echtzeit aus dem Filmquellmaterial erfolgen kann.

Erfindungsgemäß wird dann jeweils eine Filmsequenz erstellt, die das Ereigniskennungs-highlight, ein Einleitungs- und/oder Ausleitungsereignis, welches anhand der dem Ereigniskennungshighlight zugeordneten Ereigniskennungen ermittelt wurde umfasst, wobei zu verstehen ist, dass erfindungsgemäß die Filmsequenz insbesondere auch nur aus diesen Ereignissen (Ereigniskennungshighlight, Einleitungs- bzw. Ausleitungsereigniskennung) und ggf. etwaigen dazwischen liegenden Ereignissen bestehen kann.

Gemäß einer ersten bevorzugten Ausführungsform ist vorgesehen, dass das Anwenden der logischen Verknüpfung umfasst:
- Bereitstellen einer Zuordnungstabelle, welche jedem aus einer Anzahl von möglichen Ereigniskennungshighlight-Typen jeweils mindestens ein, vorzugsweise mehrere mögliche Einleitungs- und/oder Ausleitungs-Ereigniskennungstypen zuweist, und
- Auslesen der dem jeweils ausgewählten Ereigniskennungshighlight-Typ entsprechend zugewiesenen Einleitungs- und/oder Ausleitungs-Ereigniskennungstypen aus der Tabelle.

Bei dieser bevorzugten Ausführungsform wird vor Auswertung des Filmquellmaterials eine Zuordnungstabelle erstellt, in welcher logische Verknüpfungen zwischen unterschiedlichen Ereigniskennungen definiert sind. Dabei können jeder Ereigniskennung ein oder mehrere Einleitungs- und/oder Ausleitungs-Ereigniskennungstypen innerhalb der Zuordnungstabelle zugewiesen sein. Im Falle von mehreren zugewiesenen Ereigniskennungstypen ist zu verstehen, dass diese in einer logischen ODER-Verknüpfung zugewiesen sein können, d.h., die Tabelle weist dem jeweiligen Ereigniskennungshighlight-Typus eine Mehrzahl von Ereigniskennungen zu, von denen genau eine erfüllt bzw. gefunden sein muss, um die Filmsequenz zu vervollständigen. Darunter ist jedoch auch zu verstehen, dass mehrere Ereigniskennungen als logische UND-Verknüpfung einem Ereigniskennungshighlight-Typus zugewiesen sein können, d.h. die Filmsequenz wird vervollständig, indem alle zugewiesenen Ereigniskennungen innerhalb des Filmquellmaterials aufgesucht werden und die Filmsequenz entsprechend um diese Mehrzahl von Ereigniskennungen nach vorne bzw. hinten um das Ereigniskennungshighlight ergänzt wird. Grundsätzlich ist bei dieser Fortbildung zu verstehen, dass vor der Erstellung der Filmsequenzen zumindest die Zuordnungstabelle erstellt sein muss. Zusätzlich können aber auch bereits das Filmquellmaterial und die dazu vermerkten Ereigniskennungen solcherart logisch analysiert sein, dass jeder Ereigniskennung die jeweiligen Einleitungs- bzw. Ausleitungsereigniskennungen zu jedem Ereignis auf dem Filmquellmaterial zugewiesen sind, was beispielsweise ebenfalls in weiteren einer individuellen Zuordnungstabelle zum Filmquellmaterial erfolgen kann. Diese vorbereitende logische Aufbereitung des Filmquellmaterials ermöglicht es einem späteren Benutzer, ohne größeren Rechenaufwand und folglich quasi in Echtzeit zu einem späteren Zeitpunkt beliebige Filmsequenzen zu ausgewählten Ereignissen auf dem Filmquellmaterial zu erstellen.

Noch weiter ist es bevorzugt, dass eine Zuordnungstabelle bereitgestellt wird, die
- jedem der Anzahl von möglichen Ereigniskennungshighlight-Typen den jeweils mindestens einen, vorzugsweise die mehreren möglichen Einleitungs- und/oder Ausleitungs-Ereigniskennungstypen in einer ersten Zuweisungsebene zuweist,
- einem oder mehreren der Einleitungs- und/oder Ausleitungs-Ereigniskennungstypen der ersten Zuweisungsebene einen, vorzugsweise mehrere mögliche Einleitungs- und/oder Ausleitungs-Ereigniskennungstypen in einer zweiten Zuweisungsebene zuweist, und
- gegebenenfalls in weiteren Zuweisungsebenen einem oder mehreren der Einleitungs- und/oder Ausleitungs-Ereigniskennungstypen einer n-ten Zuweisungsebene einen, vorzugsweise mehrere mögliche Einleitungs- und/oder Ausleitungs-Ereigniskennungstypen in einer n+1-ten Zuweisungsebene zuweist und dass beim Vorwärts- bzw. Rückwärtssuchen
- ausgehend von der nächstliegenden, in der ersten Zuweisungsebene zugewiesenen Einleitungs- bzw. Ausleitungsereigniskennung die hierzu entsprechend zuvor bzw. danach nächstliegende Einleitungs- bzw. Ausleitungsereigniskennung von dem Typ gesucht und zugeordnet wird, wenn die aufgefundene Einleitungs- bzw. Ausleitungsereigniskennung von einem Typ ist, dem in der Zuordnungstabelle ein Einleitungs- und/oder Ausleitungs-Ereigniskennungstyp in der zweiten Zuweisungsebene zugewiesen ist, und
- entsprechend gegebenenfalls ausgehend von der nächstliegenden, in einer n-ten Zuweisungsebene zugewiesenen Einleitungs- bzw. Ausleitungsereigniskennung die hierzu entsprechend zuvor bzw. danach nächstliegende Einleitungs- bzw. Ausleitungsereigniskennung von dem Typ gesucht und zugeordnet wird, wenn die aufgefundene Einleitungs- bzw. Ausleitungsereigniskennung von einem Typ ist, dem in der Zuordnungstabelle ein Einleitungs- und/oder Ausleitungs-Ereigniskennungstyp in der n+1-ten Zuweisungsebene zugewiesen ist.

Gemäß dieser bevorzugten Ausführungsform wird eine Zuordnungstabelle bereitgestellt, die zu jedem Ereigniskennungshighlight-Typus eine nach Art einer Baumstruktur verzweigte Zuweisung von mehreren Einleitungs- und/oder Ausleitungs-Ereigniskennungstypen abgespeichert hat. Die solcherart abgespeicherte Zuordnungstabelle ermöglicht eine differenzierte und zugleich variantenreiche Zuweisung von Einleitungs- bzw. Ausleitungsereigniskennungen zu einem ausgewählten Ereigniskennungs-highlight, indem ermöglicht wird, eine Reihe von mehreren Ereigniskennungen in einer sowohl logischen ODER-Verknüpfung innerhalb einer jeweiligen Ebene als auch einer logischen UND-Verknüpfung zwischen den jeweiligen Ebenen als Einleitungsereignisfolge bzw. Ausleitungsereignisfolge in die Filmsequenz einzubeziehen. Dabei ist zu verstehen, dass die in den einzelnen Verzweigungen sich ergebende Anzahl von logisch UNDverknüpften Ereigniskennungen nicht notwendigerweise stets gleich sein muss, sondern in einer ersten ODER-Variante auf erster Ebene lediglich eine Ereigniskennung dem Ereigniskennungshighlight-Typus zugewiesen sein kann, in einer anderen, in erster Ebene ODER-zugeordnete Ereigniskennung jedoch eine oder mehrere weitere Ereigniskennungen in der zweiten bzw. weiteren darauf folgenden Ebenen UND-verknüpft sind.

Gemäß einer noch weiteren bevorzugten Ausführungsform ist es vorgesehen, dass aus dem Filmquellmaterial die bereitzustellende Filmsequenz erstellt wird, indem ausgehend von einer Ereigniskennung, die dem ausgewählten Ereigniskennungshighlight-Typus entspricht, alle Ereignisse, die dem Typus entsprechen, der in der logischen Verknüpfung diesem Ereigniskennungshighlight-Typus zugeordnet ist, und die zeitlich nächstliegend zu der Ereigniskennung des ausgewählten Ereigniskennungshighlight-Typus sind, einbezogen werden und die Filmsequenz nach vorne bzw. hinten auf eine Zeitlänge erstreckt oder verkürzt wird, die einem vorbestimmten Mindest- bzw. Maximalmaß entspricht, wenn die Ereignisse innerhalb dieses Mindest- bzw. außerhalb dieses Maximalmaßes um das Ereignis liegen, welches dem Ereigniskennungshighlight-Typus entspricht.

Diese Fortbildung bezieht neben den durch die sich aus der logischen Verknüpfung ergebenden Ereigniskennungen erfolgende zeitliche Begrenzung der Filmsequenz nach vorne bzw. hinten noch eine vorbestimmt fixierte Mindest- bzw. Maximallänge einer Filmsequenz ein. Durch die Bestimmung eines Mindestmaßes wird erreicht, dass keine Filmsequenz, die aus dem Filmquellmaterial um ein ausgewähltes Ereignis herum erstellt wird, keine kürzere Laufzeit hat als durch dieses Mindestmaß begrenzt. Dies trägt der Gewohnheit eines Zuschauers Rechnung, Filmsequenzen, die aus sehr kurzen Zeitabschnitten bestehen, als unzureichend informativ zu empfinden bzw. diese nicht aufnehmen oder nachvollziehen zu können. Durch die Maximalmaßbestimmung wird wiederum bei der Erstellung der Filmsequenzen vermieden, dass Ereignisse, die zeitlich zu weit von dem ausgewählten Ereignishighlight entfernt stattgefunden haben, in die Filmsequenz einbezogen werden, da in diesem Fall damit zu rechnen ist, dass zwischen einem solchen weit entfernten Ereignis und dem ausgewählten Ereignishighlight zu viel unrelevantes Filmmaterial liegt, welches durch die Einbeziehung des weit entfernten Ereignisses in die Filmsequenz einbezogen wäre und folglich eine insgesamt zu langatmige Filmsequenz erstellt würde. Auf diese Weise wird eine Maximalbegrenzung der Filmsequenzen bereitgestellt. Diese Maximaldauer kann als absolute Maximaldauer zu verstehen sein, d.h. rund um ein Ereignishighlight wird um eine maximal vorbestimmte Zeitdauer die Filmsequenz nach vorne und/oder hinten erweitert oder aber als relativ definierte Maximaldauer definiert sein kann, d.h. bei einer jeweils logischen Erstreckung von einander zugewiesenen Ereignissen in mehreren Ebenen wird eine Maximaldauer definiert, um welche Ereignisse in zwei benachbarten Ebenen voneinander beabstandet sein dürfen, um in eine einzige Filmsequenz einbezogen zu werden.

Noch weiter ist es bevorzugt, dass
- eine Liste von unterschiedlichen Typen von Ereigniskennungen bereitgestellt wird, die einen bestimmten Aspekt eines Ereignisses beschreibt,
- zumindest einem Ereignis eine logische Verknüpfung von zumindest zwei unterschiedlichen Typen von Ereigniskennungen zugeordnet werden,
- das Ereigniskennungs-Highlight ausgewählt wird, indem
   ∘ eine logische Verknüpfung von mehreren Typen von Ereigniskennungen über eine Benutzerschnittstelle eingegeben wird und
   ∘ ein Ereignis anhand dieser Eingabe ermittelt wird, dessen Ereigniskennungen der logischen Verknüpfung entspricht.

Diese Fortbildung ermöglicht es, ein Ereignis durch mehrere Ereigniskennungen zu beschreiben, welche jeweils auf das Ereignis zutreffen. Dies ermöglicht eine insgesamt differenziertere Charakterisierung von Ereignissen, beispielsweise indem bei Sportereignissen einem Ereignis sowohl eine Ereigniskennung zugeordnet wird, die dem Typus nach einer Aktion beschreibt, als auch eine Ereigniskennung, die dem Typus nach eine Person beschreibt oder mehrere Personen, die in dieses Ereignis eingebunden sind als auch möglicherweise eine Ereigniskennung, die von einem Typ einer qualitativen Bewertung der Ereignisrelevanz, beispielsweise als Bewertung der sportlichen Leistung, die in diesem Ereignis liegt, umfasst. Dies ermöglicht es, aus der Vielzahl von Ereignissen auch durch logische Verknüpfung von mehreren Ereigniskennungen, was durch jegliche Art der logischen Verknüpfungsarten erfolgen kann, ein Ereignis gezielt auszuwählen. So könnten beispielsweise im vorangegangenen Beispiel nur diejenigen Ballgewinne als Ereignisse ausgewählt werden, an denen ein bestimmter Spieler beteiligt war und die hinsichtlich ihrer sportlichen Attraktivität in die höchste von möglichen drei Bewertungsstufen klassifiziert sind.

Noch weiter ist es bevorzugt, dass
- ein erstes Filmquellmaterial bereitgestellt wird, welches Ereignisse aus einem Beobachtungszeitraum wiedergibt, und
- zumindest ein weiteres Filmquellmaterial bereitgestellt wird, welches Ereignisse aus dem gleichen Beobachtungszeitraum wiedergibt,
- das erste und die weiteren Filmquellmaterialien ausgewertet werden durch Zuordnen von Ereigniskennungen und Abspeichern der zugeordneten Ereigniskennungen mit Zuweisung einer Filmquellmaterialbezeichnung und Zeitangabe,
- wobei bei der Auswertung eines Filmquellmaterials auch Ereigniskennungen einem Zeitpunkt zugeordnet werden, die Ereignissen entsprechen, die auf einem anderen Filmquellmaterial wiedergegeben sind, und
- die zu erstellende Filmsequenz aus dem ersten und dem weiteren Filmquellmaterial anhand der aus der logischen Verknüpfung ausgewählten Ereigniskennungen erstellt wird.

Bei dieser Fortbildung wird es ermöglicht, aus mehr als einem Filmquellmaterial eine Filmsequenz zu erstellen, wobei die mehreren Filmquellmaterialien das gleiche Ereignis und den gleichen Beobachtungszeitraum wiedergeben. Diese Fortbildung ermöglicht somit eine komfortable und umfassende Bildberichterstattung anhand von Filmsequenzen, die mit dem erfindungsgemäßen Verfahren erstellt werden, wobei in die Filmsequenz Darstellungen aus unterschiedlichen Kameraperspektiven einbezogen werden können, um ein Ereignis umfassend zu dokumentieren und wiederzugeben. Insbesondere kann hierbei auch eine oder mehrere Kameraperspektiven eingeblendet werden, welche eine zum Ereignis gehörende, gleichzeitig stattfindende Handlung wiedergibt, die an einem anderen Ort beobachtet wird. Für die zuvor erläuterten Beispiele einer Sportreportage im Bereich Fußball kann beispielsweise im Falle eines Torschusses oder Fouls auch eine Reaktion von der Trainerbank oder aus dem Fanbereich in die Filmsequenz einbezogen werden, darüber hinaus ist es auch denkbar, in die Filmsequenz Reaktionen aus einem zeitgleich stattfindenden Spiel eines direkten Tabellenkonkurrenten in einem anderen Fußballstadion einzublenden, sofern dort aufgrund einer Echtzeitberichterstattung über das Ereignishighlight relevante Ereignisse auf dem Filmquellmaterial dokumentiert sind. Diese Art der Querverweisung zwischen unterschiedlichen Filmquellmaterialien hat insbesondere auch im Bereich der Anlagenüberwachung mit mehreren Kameras Bedeutung, denn um im Rahmen einer solchen automatisierten Anlagenüberwachung eine zuverlässige Detektion von aufgetretenen Störungen zu erzielen, ist es oftmals notwendig, einen mit einer Kamera an einem Ort beobachteten Effekt insoweit zurückzuverfolgen und in eine Filmsequenz einzubeziehen, dass ein Einleitungsereignis gesucht wird, welches zeitlich vor diesem Effekt an anderer Stelle durch eine andere Kamera beobachtet wurde, da dieses als Auslöser des zuvor erläuterten Effekts in Frage kommen könnte.

Erfindungsgemäß ist vorgesehen, dass ein Ereignis-Indexwert ermittelt wird, indem
- Jedem Ereignis anhand von dessen Ereigniskennung(en) ein Punktwert zugeordnet wird, und
- Jede Ereigniskennung mit deren jeweiligem Punktwert multipliziert wird,
- Die Summe aus den Punktwerten aller Ereigniskennungen innerhalb einer vorbestimmten Zeitdauer durch die Zeitdauer dividiert wird.

Dies ermöglicht eine qualitative Bewertung von bestimmten Zeitperioden eines Filmquellmaterials oder auch eines gesamten Filmquellmaterials, in dem darauf zu sehende Ereignisse nach ihrem Informationswert indiziert werden und auf diese Weise eine Aussage über die Informationsdichte auf dem Filmquellmaterial oder einer daraus erstellten Filmsequenz gewonnen werden kann. Dabei ist zu verstehen, dass der Punktwert in der zuvor erläuterten Zuordnungstabelle zugeordnet sein kann und dies vorzugsweise vor der Auswertung des Filmquellmaterials zu Filmsequenzen erfolgt. Alternativ kann jedoch auch ein Punktwert durch eine manuelle durchgeführte Beurteilung der einzelnen Ereignisse zugeordnet werden, beispielsweise um subjektiv zu beurteilende Qualitätsmerkmale wie sportliche Leistung, Relevanz eines Ereignisses für den gesamten, auf dem Filmquellmaterial dokumentierten Vorgang oder schlichtweg journalistischer Informationsgehalt eines Ereignisses beurteilt wird.

Dabei ist erfindungsgemäß vorgesehen, dass aus einem ersten und zumindest einem weiteren Filmquellmaterial anhand des Ereignis-Indexwertes ermittelt wird, aus welchem Filmquellmaterial eine Filmsequenz erstellt wird, indem dasjenige Filmquellmaterial ausgewählt wird, welches den höheren Ereignis-Indexwert aufweist. Dies ermöglicht es, bei Auswertung von zwei oder mehr Filmquellmaterialien für ein Ereignis jeweils dasjenige Filmquellmaterial auszuwählen, welches das Ereignis in günstigerer Weise, d.h. mit einem höheren Ereignis-Indexwert und folglicherweise Informationsgehalt wiedergibt. Weiterhin wird durch diese Fortbildung ermöglicht, in einer Livekonferenz zwischen mehreren Vorgängen innerhalb einer Filmsequenz hin- und herzuschalten und hierbei stets die Ereignisse aus den unterschiedlichen Vorgängen wiederzugeben, welche den höchsten Informationsgehalt für einen Betrachter bieten. Dabei ist wiederum zu verstehen, dass durch entsprechend logische Verknüpfungen ein Benutzer des erfindungsgemäßen Verfahrens seine subjektive Präferenz vorgeben kann, beispielsweise indem er aus einer Auswahl von insgesamt sechs Filmquellmaterialien nur drei angibt, welche er in der zu erstellenden Filmsequenz beobachten will und hierbei die weitere Vorgabe macht, dass er mit Präferenz ein bestimmtes Filmquellmaterial beobachten will und Ereignisse aus anderen Filmquellmaterialien nur dann in die für ihn individuell erstellte Filmsequenz einbezogen werden sollen, wenn diese Ereignisse einen bestimmten Indexwert überschreiten.

Noch weiter ist es bevorzugt, dass bei der Erstellung von Filmsequenzen aus einer Live- oder Quasi-Liveübertragung ein Zukunftsereignis-Indexwert ermittelt wird, indem
- Eine Liste bereitgestellt wird, in der Ereigniskennungen aufgeführt sind, die in Relation zu einem bestimmten, in deren Folge zu erwartenden Ereignis-Highlight stehen,
- Aus den Ereignissen eines Zeitraums, der von einem aktuellen Zeitpunkt um einen vorbestimmten Zeitraum zurückreicht, Ereignisse ausgewählt werden, deren Ereigniskennung in der Liste enthalten ist,
- Die Anzahl der solcherart ausgewählten Ereigniskennungen innerhalb einer vorbestimmten Zeitdauer durch diese Zeitdauer dividiert wird und
dass dann, wenn der Zukunftsereigniswert einen vorbestimmten Grenzwert überschreitet, eine Filmsequenzauswahl erfolgt, welche den Eintritt des Ereignis-Highlights berücksichtigt.

Diese spezifische Fortbildung des Verfahrens ist für eine Erstellung von Filmsequenzen aus Live- oder Quasi-Liveübertragungen besonders vorteilhaft, wobei unter einer Liveübertragung eine tatsächlich nur durch die aufgrund einer Satelliten-Netz- oder Funkübertragung und der Wandlung dieser Signale auftretende Verzögerung zwischen Aufzeichnung und Wiedergabe eines Vorgangs zu verstehen ist, wohingegen unter einer Quasi-Liveübertragung eine Übertragung verstanden werden soll, welche zusätzlich hierzu zum Zwecke einer zeitlich begrenzten Vorausschau eines Auswertungsvorgangs eine zeitliche Verzögerung zwischen Aufzeichnung und Wiedergabe eines Ereignisses auftritt, die oberhalb der zuvor erläuterten Verzögerung liegt, jedoch unterhalb der Gesamtdauer des auf dem Filmquellmaterial wiedergegebenen Vorgangs liegt. Um bei solchen Live- oder Quasi-Liveübertragungen eine Erfassung der relevanten Ereignisse aus mehreren Filmquellmaterialien zu erreichen, ist es oftmals unpraktikabel, lediglich die Indexwerte der soeben stattfindenden Ereignisse zu berücksichtigen, da hierdurch nicht in ausreichender Weise vorhergesehen werden kann, wie sich eine auf dem Filmquellmaterial aktuelle aufgezeichnete Ereignisfolge entwickeln wird. Oftmals kann aus einer Abfolge von bestimmten Ereignissen darauf geschlossen werden, dass in naher Zukunft auf dem Filmquellmaterial ein Ereignis folgen müsste, welches einen hohen Informationsgehalt und folglich hohen Indexwert aufweist. Dieser Umstand wird durch die erfindungsgemäße Fortbildung genutzt, um aus bestimmten Folgen von Ereignissen anhand derer Kennungen bzw. Indexwerte eine Prognose für die zukünftige Entwicklung zu treffen und in Abhängigkeit dieser Prognose die dargestellten Ereignisse und/oder die zukünftigen Ereignisse in die Filmsequenz einzubeziehen, die mit dem erfindungsgemäßen Verfahren erstellt wird. Diese Fortbildung ermöglicht somit eine vorausschauende Zusammenstellung von Ereignissen aus unterschiedlichen Vorgängen, die sich davon abkehrt, lediglich die aktuell beobachteten Ereignisse und deren Indexwerte heranzuziehen, um den Informationsgehalt der Ereignisfolge zu bestimmen, sondern stattdessen anhand einer logischen Verknüpfung der Folge von Ereignissen und eines Vergleichs mit zuvor abgespeicherten Folgen von Ereignissen, die erfahrungsgemäß oder zwangsläufig zu Ereignis-highlights mit hohem Indexwert führen, zu vergleichen, um auf diese Weise eine Relevanzabschätzung der Ereignisfolge in die Zukunft vorzunehmen.

Ein weiterer Aspekt der Erfindung ist ein Computerprogrammprodukt zum Ablauf auf einem Computer, welches ausgebildet ist,
eine Filmsequenz gemäß Anspruch 1 zu erstellen.

Das solcherart definierte Computerprogrammprodukt ermöglicht es einem Benutzer, aus Filmquellmaterial in schneller Weise Filmsequenzen zu erstellen, die bestimmte Ereigniskennungen in einer nachvollziehbaren Zusammenstellung umfassen.

Eine bevorzugte Ausführungsform wird nachfolgend anhand der beiliegenden Figuren erläutert. Es zeigen:
Fig. 1 eine schematische Darstellung eines Ausschnitts aus einem Filmquellmaterial mit dazu zugewiesenen Ereigniskennungen,
Fig. 2 eine schematische Darstellung einer Zuordnungstabelle unterschiedlicher Ereigniskennungen zueinander, und
Fig. 3 eine schematische Darstellung eines Ausschnitts aus einem ersten und eines Ausschnitts aus einem zweiten Filmquellmaterial mit jeweils zugewiesenen Ereigniskennungen sowie einer daraus erstellten Filmsequenz.

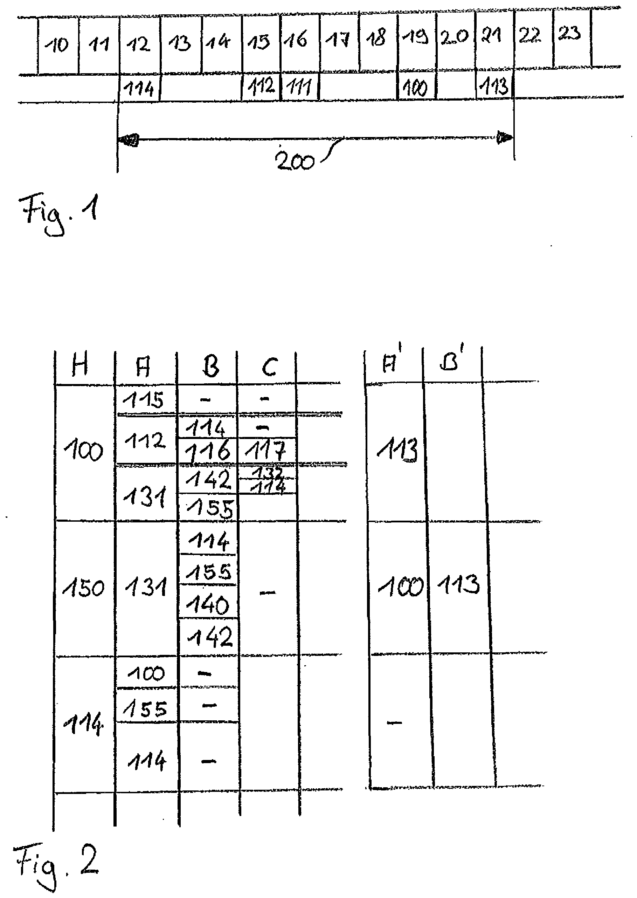

Bezug nehmend zunächst auf Fig. 1 ist ein Ausschnitt aus einem Filmquellmaterial abgebildet, welcher Bildsequenzen 10 - 23 umfasst. Dabei kann eine einzelne Bildsequenz 10, 11, 12, ... 23 erfindungsgemäß so verstanden werden, dass sie ein Einzelbild ist oder dass sie eine Reihe von zeitlich aufeinander folgenden Einzelbildern ist. Grundsätzlich können in den Bildsequenzen 10, 11, 12, ... 23 Ereignisse wiedergegeben sein, wobei nicht notwendigerweise in jeder Bildsequenz ein Ereignis stattfinden muss. Die Ereignisse, welche in der in Fig. 1 dargestellten Filmsequenz enthalten sind, sind mittels eines Scoutingsystems gekennzeichnet. Die Filmsequenz weist eine Ereignisfolge auf, die aus einer Flanke 114 in der Bildsequenz 12, einer Kopfballverlängerung 112, einem missglückten Abwehrversuch 111 in Bildsequenz 16 und einem Tor 100 in Bildsequenz 19, gefolgt von einem außergewöhnlichen Torjubel 113 in Bildsequenz 21 besteht. Diesen Bildsequenzen gehen Bildsequenzen 10, 11 voraus und Bildsequenzen 22, 23 nach, in denen keine einer Ereigniskennung zugänglichen Ereignisse abgebildet sind.

Fig. 2 zeigt eine beispielhafte Zuordnungstabelle für verschiedene Ereigniskennungen zueinander. In der ersten Spalte H sind mögliche Ereigniskennungshighlights 100, 150, 114 wiedergegeben. Ein Benutzer des erfindungsgemäßen Verfahrens kann ein solches Ereigniskennungshighlight auswählen, um daraus eine Filmsequenz zu erstellen, wobei zu verstehen ist, dass der Benutzer, sollten mehrere Ereignisse der entsprechend ausgewählten Ereigniskennung auf dem Filmquellmaterial abgebildet sein, hierunter ein oder mehrere Ereignisse entsprechend auswählen kann, um entsprechende Filmsequenzen zu erstellen.

Wie ersichtlich ist, sind dem Ereigniskennungshighlight 100 ("Tor") in einem ersten Rang A die Ereigniskennungen 115 "Distanzschuss", 112 "Kopfball" und 131 "Elfmeter" zugeordnet. Während der Ereigniskennung 115 im zweiten Rang B keine weitere Ereigniskennung zugewiesen ist, sind der Ereigniskennung 112 im zweiten Rang die Ereigniskennungen 114 "Flanke" und 116 "Eckball" zugeordnet, d.h. diese beiden Ereigniskennungen 114, 116 sind mit einer ODER-Verknüpfung im zweiten Rang einander angeführt und die solcherart kombinierte Ereigniskennungsgruppe 114, 116 ist mit einer UND-Verknüpfung der Ereigniskennung 112 im ersten Rang zugeordnet. Die Ereigniskennung 112 ist wiederum mit ODER-Verknüpfung in eine Gruppe mit den Ereigniskennungen 115, 131 zusammengefasst und diese Gruppe 115, 112, 131 ist mit einer UND-Verknüpfung der Ereigniskennung 100 als Ereigniskennungshighlight zugeordnet.

In einem dritten Rang C ist der Ereigniskennung 116 des zweiten Rangs eine Ereigniskennung 117 "Ballverlust zur Ecke" zugeordnet, wohingegen der Ereigniskennung 114 im dritten Rang keine weitere Ereigniskennung mehr zugeordnet ist.

Die in Fig. 2 gezeigte Tabelle weist des Weiteren zwei weitere mögliche Ereigniskennungshighlights 150, 114 auf, denen im ersten Rang die Ereigniskennungen 131 bzw. 100, 155, 114 zugeordnet sind, wobei der Ereigniskennung 131 im zweiten Rang die Ereigniskennungen 114, 155, 140, 142 zugeordnet sind.

Die Ränge A, B, C stellen die möglichen Einleitungsereignisse dar. Wendet man die in Fig. 2 gezeigte Zuordnungstabelle auf das in Fig. 2 gezeigte Filmquellmaterial an und geht davon aus, dass ein Benutzer das Ereigniskennungshighlight 100 in der Bildsequenz 19 ausgewählt hat, so wird das erfindungsgemäße Verfahren bei der Suche nach dem Einleitungsereignis zu diesem Ereignishighlight in Bildsequenz 19 zeitlich durch die Bildsequenzen 18, 17 ... zurückgehen und als erste Ereigniskennung den missglückten Abwehrversuch 111 in Bildsequenz 16 ermitteln. Die Ereigniskennung 111 ist jedoch zum Ereigniskennungshighlight 100 nicht im ersten Rang in der Zuordnungstabelle zugeordnet, so dass entsprechend weiter die Bildsequenzen zurückverfolgt werden und die Ereigniskennung 112 "Kopfballverlängerung" in Bildsequenz 15 als zugeordnete Ereigniskennung im ersten Rang ermittelt wird.

Wäre der Ereigniskennung 112 im zweiten Rang B keine weitere Ereigniskennung zugeordnet, so wäre die Filmsequenz mit der Bildsequenz 15 zu beginnen. Da jedoch im gezeigten Beispiel der Ereigniskennung 112 im zweiten Rang alternativ die Ereigniskennungen 114, 116 zugeordnet sind, erkennt das Verfahren hieraus, dass es die Bildsequenzen noch weiter zurückverfolgen muss, um eine sinnvolle Filmsequenz rund um das Ereigniskennungshighlight 100 in dieser Ereigniskonstellation zu erstellen. Wird das Filmquellmaterial dann weiter über die Bildsequenzen 14, 13, 12 zurückverfolgt, so wird in der Bildsequenz 12 die Ereigniskennung 114 "Flanke" erkannt, welche in dem Rang B als mögliche Ereigniskennung angeführt ist. Dieser Ereigniskennung ist im Rang C keine weitere Ereigniskennung zugewiesen, d.h. in der Ereigniskennung 114 in Bildsequenz 12 ist das entsprechende Einleitungsereignis zum Ereignishighlight mit der Kennung 100 in Bildsequenz 19 ermittelt worden. Folglich wird die automatisch generierte Filmsequenz zum Ereigniskennungshighlight 100 in Bildsequenz 19 mit der Bildsequenz 12 gestartet, wie durch die Zeitperiode 200 der Filmsequenz 200 am linken Ende in Fig. 1 dargestellt.

Die Zuordnungstabelle in Fig. 2 weist des Weiteren Zuordnungsränge A', B' auf, welche Ausleitungsereigniskennungen dem jeweiligen Ereigniskennungshighlight zuordnen. Wie hier zu erkennen ist, ist dem Ereigniskennungshighlight 100 "Tor" ausschließlich die Ereigniskennung 113 "außergewöhnlicher Torjubel" im ersten Rang A' zugeordnet, welcher im zweiten Rang B' keine weitere Ereigniskennung zugeordnet ist.

Ausgehend von der Bildsequenz 19 wird das erfindungsgemäße Verfahren folglich die Bildsequenzen 20, 21 des Filmquellmaterials abfragen und in Bildsequenz 21 die Ereigniskennung 113 ermitteln, welche folglich als Filmsequenzende der Filmsequenz 200 einzusetzen ist.

Das anhand der Figuren 1 und 2 erläuterte Verfahren zur Erstellung von Filmsequenzen aus Filmquellmaterial ist des Weiteren mit zeitabhängigen Konditionen versehen, die wie folgt eingebunden sind. Zunächst wird durch eine Minimalzeitkondition sichergestellt, dass eine Filmsequenz aus zumindest vier Bildsequenzen zusammengesetzt ist. Diese Minimalzeitkondition definiert, dass ausgehend von einer Bildsequenz, in der das ausgewählte Ereigniskennungshighlight zugeordnet ist, mindestens zwei Bildsequenzen in rückwärtiger Richtung zurückverfolgt werden und mindestens eine Bildsequenz in Vorwärtsrichtung weiterverfolgt werden, so dass inklusive der ausgewählten Bildsequenz stets mindestens vier Bildsequenzen zu einer Filmsequenz zusammengesetzt werden.

Des Weiteren ist eine Maximalzeitkondition eingestellt, welche dafür Sorge trägt, dass eine Filmsequenz nie länger als 16 Bildsequenzen ist. Diese Maximalzeitkondition ist solcherart definiert, dass ausgehend von einer als Ereigniskennungshighlight ausgewählten Bildsequenz maximal 10 Bildsequenzen in rückwärtiger Richtung zurückverfolgt werden, um die in der Zuordnungstabelle gemäß Fig. 2 vermerkte Einleitungsereigniskennung aufzufinden und maximal 5 Bildsequenzen in Vorwärtsrichtung weiterverfolgt werden, um die in der Zuordnungstabelle gemäß Fig. 2 angeführte Ausleitungsereigniskennung aufzufinden. Findet sich innerhalb dieser maximal zu verfolgenden Bildsequenzen nicht die in der Zuordnungstabelle angeführte Einleitungs- bzw. Ausleitungsereigniskennung, so wird die Filmsequenz entweder aus der innerhalb dieser Maximalzeit ermittelten Vorstufenereigniskennung der untergeordneten Ebene A, B bzw. A', B' usw. gestartet bzw. beendet oder, sofern sich auch solche Ereigniskennungen nicht innerhalb der Maximalzeit in dem Filmquellmaterial rund um das ausgewählte Ereigniskennungshighlight auffinden lassen, die Filmsequenz aus der durch die Minimalzeitkondition definierten Bildsequenzen zusammengesetzt.

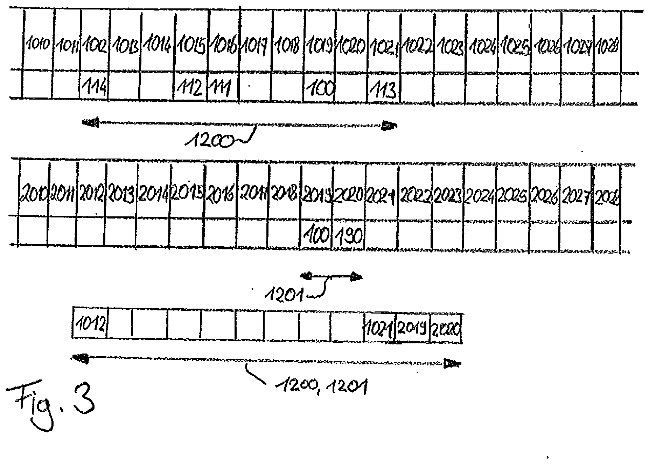

Bezug nehmend nun auf Fig. 3 ist eine Ausführungsform gezeigt, welche einen Ausschnitt eines ersten Filmquellmaterials mit Bildsequenzen 1010, 1011, ... 1028 und einen Ausschnitt aus einem zweiten Filmquellmaterial mit Bildsequenzen 2010, 2011, ... 2028 auswertet. Es wird hier angenommen, dass das erste Filmquellmaterial eine Darstellung eines Vorgangs auf dem Spielfeld eines Fußballspiels zeigt und entsprechend des Filmquellmaterials gemäß Fig. 1 ist und das zweite Filmquellmaterial eine Darstellung ist, die in zeitgleicher und synchroner Weise zum ersten Filmquellmaterial eine Trainerbank zeigt, die am Rande des Fußballfeldes zu diesem Fußballspiel liegt.

Wiederum sei angenommen, dass aus dem ersten Filmquellmaterial das Ereigniskennungshighlight 100 in der Bildsequenz 1019 ausgewählt sei, um hierum eine Filmsequenz durch das erfindungsgemäße Verfahren automatisch zu erstellen. Hieraus wird dann, in der zuvor beschriebenen Weise, die Filmsequenz 1200 erstellt, welche durch die Einleitungsereigniskennung 114 in Bildsequenz 1012 gestartet wird und durch die Ausleitungsereigniskennung 113 in Bildsequenz 1021 beendet wird.

Bezüglich der Verwertung des zweiten Filmquellmaterials 2010 ... 2028 wird hier davon ausgegangen, dass der Zuordnungstabelle, die für die Erstellung der Filmsequenz aus den beiden Filmquellmaterialien genutzt wird, in einer weiteren Spalte zu entnehmen ist, dass auf dem zweiten Filmquellmaterial zusätzlich nach einer Ausleitungsereigniskennung 190 "außergewöhnlicher Trainerjubel" in Folge zu einem Ereigniskennungshighlight 100 "Tor" gesucht werden soll. Dieser Bedingung in der Zuordnungstabelle folgend wird das erfindungsgemäße Verfahren in dem zweiten Filmquellmaterial ausgehend von der Bildsequenz 2019, die zeitgleich zur Bildsequenz 1019 erfasst wurde und den Zeitpunkt des Tores gemäß Ereigniskennungshighlight 100 erfasst, das Filmquellmaterial weiter verfolgen und hierbei unmittelbar darauf folgend in der Bildsequenz 2020 auf die Ereigniskennung 190 treffen. Der solcherart definierte kurze Ausschnitt aus den Bildsequenzen 2019, 2020 wird dann zusätzlich als Filmsequenz 1201 zusammengesetzt und hinter die Filmsequenz 1200 angehängt, um die gemäß dieser Fortbildung endgültig erstellte Filmsequenz 1020, 1021 zu erstellen.

Das erfindungsgemäße Verfahren ermöglicht es somit in einer wesentlich schnelleren Weise als mit den bisher bekannten Verfahren möglich, gezielt und individuell Filmsequenzen zu bestimmten Ereignissen auf einem Filmquellmaterial zu erstellen. Zusätzlich kann mit dem erfindungsgemäßen Verfahren die Datenmenge, die benötigt wird, um einen Vorgang, wie beispielsweise ein Fußballspiel, einem Betrachter informativ darzulegen, erheblich reduziert werden, wodurch eine insgesamt erzielte Reduktion des Datentransfervolumens erreicht wird bzw. ein schnellerer Transfer der informationsrelevanten Daten erreicht wird. Mit dem erfindungsgemäßen Verfahren wird es zudem erstmals möglich, dass ein Benutzer aus einem Filmquellmaterial in Echtzeit oder Quasi-Echtzeit die ihn individuell interessierenden Ereignisse auswählt und diese in einer sinnvollen Filmsequenz dargestellt bekommt.

Es ist grundsätzlich zu verstehen, dass die Ausführungsbeispiele lediglich in stark vereinfachter Form die Funktionsweise des erfindungsgemäßen Verfahrens wiedergeben sollen. Hierbei ist zu berücksichtigen, dass das erfindungsgemäße Verfahren in den tatsächlich zu praktizierenden Ausführungen erheblich umfangreichere Mengen an Bildsequenzen verarbeitet und erheblich umfangreichere Zuordnungstabellen mit einer großen Anzahl an möglichen Ereigniskennungshighlights und diesen zugewiesenen Ebenen aufweist.

## Patentansprüche

1. Verfahren zur Bereitstellung von Filmsequenzen aus elektronischen Filmquellmaterial, mit den Schritten:
a) Bereitstellen einer Liste von unterschiedlichen Typen von Ereigniskennungen, wobei jeder Typ ein bestimmtes Ereignis oder einen bestimmten Aspekt eines Ereignisses beschreibt und die Ereignisse bzw. Aspekte der Ereignisse optionale Handlungen sind, die auf dem Filmquellmaterial dokumentiert sein können,
b) Bereitstellen von ausgewertetem Filmquellmaterial, in dem jeweils unterschiedliche Ereigniskennungen aus der Liste der Typen von Ereigniskennungen entsprechend unterschiedlichen Ereignissen zugeordnet sind, die auf dem elektronischen Filmquellmaterial abgebildet sind,
c) Abspeichern der zugeordneten Ereigniskennungen in einem Datenformat, welches jeder Ereigniskennung eine Filmquellmaterialbezeichnung des ausgewerteten Filmquellmaterials und eine Zeitangabe, die der jeweiligen Ereigniskennung den Zeitpunkt, zu dem das dieser Ereigniskennung entsprechende Ereignis auf dem Filmquellmaterial abgebildet ist, zuordnet,
d) Auswählen eines bestimmten Ereigniskennungs-Highlights aus den zugeordneten Ereigniskennungen, wobei das Ereigniskennungs-Highlight einem in der bereitzustellenden Filmsequenz darzustellenden Ereignis entspricht,
e) Anwenden einer logischen Verknüpfung auf das ausgewählte Ereigniskennungs-Highlight, welche
∘ dem Ereigniskennungs-Highlight einen Einleitungs-Ereigniskennungstyp oder eine Auswahl von Einleitungs-Ereigniskennungstypen für eine Einleitungssequenz zuordnet, wobei der Einleitungs-Ereigniskennungstyp einem Typ von Ereigniskennungen entspricht, die ein Ereignis, wie einen "Elfmeterschuss" oder ein "Foul innerhalb des Strafraums", kennzeichnen, welches das darzustellende Ereignis, wie ein "Tor", einleitet, und/oder
∘ dem Ereigniskennungs-Highlight einen Ausleitungs-Ereigniskennungstyp oder eine Auswahl von Ausleitungs-Ereigniskennungstypen für eine Ausleitungssequenz zuordnet, wobei der Ausleitungs-Ereigniskennungstyp einem Typ von Ereigniskennungen entspricht, die ein Ereignis, wie einen "Torjubel" oder eine "Reaktion eines Torwarts", kennzeichnen, welches das darzustellende Ereignis, wie ein "Tor", ausleitet,
f) Zeitliches Rückwärtssuchen innerhalb der zugeordneten Ereigniskennungen ausgehend von dem Zeitpunkt des Ereigniskennungshighlights nach der zeitlich nächsten davor liegenden Ereigniskennung vom Einleitungs-Ereigniskennungstyp, welche diesem Ereigniskennungshighlight zugeordnet ist und Zuordnen der solcherart gefundenen Ereigniskennung als Einleitungsereigniskennung dem Ereigniskennungshighlight, sofern dem Ereigniskennungshighlight ein Einleitungs-Ereigniskennungstyp zugeordnet ist,
g) Zeitliches Vorwärtssuchen innerhalb der zugeordneten Ereigniskennungen ausgehend von dem Zeitpunkt des Ereigniskennungshighlights nach der zeitlich nächsten danach liegenden Ereigniskennung vom Ausleitungs-Ereigniskennungstyp, welche diesem Ereigniskennungshighlight zugeordnet ist, und Zuordnen der solcherart gefundenen Ereigniskennung als Ausleitungsereigniskennung dem Ereigniskennungshighlight, sofern dem Ereigniskennungshighlight ein Ausleitungs-Ereigniskennungstyp zugeordnet ist, und
h) Erstellen der bereitzustellenden Filmsequenz, indem aus dem Filmquellmaterial eine Filmsequenz erstellt wird, welche die Ereignisse, die
∘ der Einleitungsereigniskennung, sofern eine solche ermittelt wurde,
∘ dem Ereigniskennungshighlight und
∘ der Ausleitungsereigniskennung, sofern eine solche ermittelt wurde, zugeordnet sind, umfasst,
**dadurch gekennzeichnet, dass** für ein erstes Filmquellmaterial ein erster Ereignis-Indexwert ermittelt wird, indem
- jedem Ereignis anhand von dessen Ereigniskennung ein Punktwert zugeordnet wird, und
- die Summe aus den Punktwerten aller Ereigniskennungen innerhalb einer vorbestimmten Zeitdauer durch die Zeitdauer dividiert wird, und
- dass aus einem zweiten Filmquellmaterial ein zweiter Ereignis-Indexwert ermittelt wird, indem jedem Ereignis anhand von dessen Ereigniskennung ein Punktwert zugeordnet wird und die Summe aus den Punktwerten aller Ereigniskennungen innerhalb einer vorbestimmten Zeitdauer des zweiten Filmquellmaterials durch die vorbestimmte Zeitdauer des zweiten Filmquellmaterials dividiert wird, und
- dass aus dem ersten und dem zweiten Filmquellmaterial anhand des daraus ermittelten ersten und zweiten Ereignis-Indexwertes ermittelt wird, aus welchem des ersten und zweiten Filmquellmaterials eine Filmsequenz erstellt wird, indem dasjenige des ersten und zweiten Filmquellmaterials ausgewählt wird, welches den höheren des ersten und zweiten Ereignis-Indexwertes aufweist.

2. Verfahren nach Anspruch 1,
**dadurch gekennzeichnet, dass** das Anwenden der logischen Verknüpfung umfasst:
- Bereitstellen einer Zuordnungstabelle, welche jedem aus einer Anzahl von möglichen Ereigniskennungshighlight-Typen jeweils mindestens ein, vorzugsweise mehrere mögliche Einleitungs- und/oder Ausleitungs-Ereigniskennungstypen zuweist, und
- Auslesen der dem jeweils ausgewählten Ereigniskennungshighlight-Typ entsprechend zugewiesenen Einleitungs- und/oder Ausleitungs-Ereigniskennungstypen aus der Tabelle.

3. Verfahren nach Anspruch 2,
**dadurch gekennzeichnet, dass** eine Zuordnungstabelle bereitgestellt wird, die
- jedem der Anzahl von möglichen Ereigniskennungshighlight-Typen den jeweils mindestens einen, vorzugsweise die mehreren möglichen Einleitungs- und/oder Ausleitungs-Ereigniskennungstypen in einer ersten Zuweisungsebene zuweist,
- einem oder mehreren der Einleitungs- und/oder Ausleitungs-Ereigniskennungstypen der ersten Zuweisungsebene einen, vorzugsweise mehrere mögliche Einleitungs- und/oder Ausleitungs-Ereigniskennungstypen in einer zweiten Zuweisungsebene zuweist, und
- gegebenenfalls in weiteren Zuweisungsebenen einem oder mehreren der Einleitungs- und/oder Ausleitungs-Ereigniskennungstypen einer n-ten Zuweisungsebene einen, vorzugsweise mehrere mögliche Einleitungs- und/oder Ausleitungs-Ereigniskennungstypen in einer n+1-ten Zuweisungsebene zuweist
und dass beim Vorwärts- bzw. Rückwärtssuchen
- ausgehend von der nächstliegenden, in der ersten Zuweisungsebene zugewiesenen Einleitungs- bzw. Ausleitungsereigniskennung die hierzu entsprechend zuvor bzw. danach nächstliegende Einleitungs- bzw. Ausleitungsereigniskennung von dem Typ gesucht und zugeordnet wird, wenn die aufgefundene Einleitungs- bzw. Ausleitungsereigniskennung von einem Typ ist, dem in der Zuordnungstabelle ein Einleitungs- und/oder Ausleitungs-Ereigniskennungstyp in der zweiten Zuweisungsebene zugewiesen ist, und
- entsprechend gegebenenfalls ausgehend von der nächstliegenden, in einer n-ten Zuweisungsebene zugewiesenen Einleitungs- bzw. Ausleitungsereigniskennung die hierzu entsprechend zuvor bzw. danach nächstliegende Einleitungs- bzw. Ausleitungsereigniskennung von dem Typ gesucht und zugeordnet wird, wenn die aufgefundene Einleitungs- bzw. Ausleitungsereigniskennung von einem Typ ist, dem in der Zuordnungstabelle ein Einleitungs- und/oder Ausleitungs-Ereigniskennungstyp in der n+1-ten Zuweisungsebene zugewiesen ist.

4. Verfahren nach einem der vorhergehenden Ansprüche,
**dadurch gekennzeichnet, dass**
aus dem Filmquellmaterial die bereitzustellende Filmsequenz erstellt wird, indem ausgehend von einer Ereigniskennung, die dem ausgewählten Ereigniskennungs-highlight-Typus entspricht, alle Ereignisse, die dem Typus entsprechen, der in der logischen Verknüpfung diesem Ereigniskennungshighlight-Typus zugeordnet ist, und die zeitlich nächstliegend zu der Ereigniskennung des ausgewählten Ereigniskennungshighlight-Typus sind, einbezogen werden und die Filmsequenz nach vorne bzw. hinten auf eine Zeitlänge erstreckt oder verkürzt wird, die einem vorbestimmten Mindest- bzw. Maximalmaß entspricht, wenn die Ereignisse innerhalb dieses Mindest- bzw. außerhalb dieses Maximalmaßes um das Ereignis liegen, welches dem Ereigniskennungshighlight-Typus entspricht.

5. Verfahren nach einem der vorhergehenden Ansprüche,
**dadurch gekennzeichnet, dass**
- die Liste von unterschiedlichen Typen von Ereigniskennungen einen bestimmten Aspekt eines Ereignisses beschreibt,
- zumindest einem Ereignis eine logische Verknüpfung von zumindest zwei unterschiedlichen Typen von Ereigniskennungen zugeordnet werden,
- das Ereigniskennungs-Highlight ausgewählt wird, indem
∘ eine logische Verknüpfung von mehreren Typen von Ereigniskennungen über eine Benutzerschnittstelle eingegeben wird und
∘ ein Ereignis anhand dieser Eingabe ermittelt wird, dessen Ereigniskennungen der logischen Verknüpfung entspricht.

6. Verfahren nach einem der vorhergehenden Ansprüche,
**dadurch gekennzeichnet, dass**
- ein drittes Filmquellmaterial bereitgestellt wird, welches Ereignisse aus einem Beobachtungszeitraum wiedergibt, und
- zumindest ein weiteres Filmquellmaterial bereitgestellt wird, welches Ereignisse aus dem gleichen Beobachtungszeitraum wiedergibt,
- das dritte und die weiteren Filmquellmaterialien ausgewertet werden durch Zuordnen von Ereigniskennungen und Abspeichern der zugeordneten Ereigniskennungen mit Zuweisung einer Filmquellmaterialbezeichnung und Zeitangabe,
- wobei bei der Auswertung eines Filmquellmaterials auch Ereigniskennungen einem Zeitpunkt zugeordnet werden, die Ereignissen entsprechen, die auf einem anderen Filmquellmaterial wiedergegeben sind, und
- die zu erstellende Filmsequenz aus dem dritten und dem weiteren Filmquellmaterial anhand der aus der logischen Verknüpfung ausgewählten Ereigniskennungen erstellt wird.

7. Verfahren nach einem der vorhergehenden Ansprüche,
**dadurch gekennzeichnet, dass**
bei der Erstellung von Filmsequenzen aus einer Live- oder Quasi-Liveübertragung ein Zukunftsereignis-Indexwert ermittelt wird, indem
- Eine Liste bereitgestellt wird, in der Ereigniskennungen aufgeführt sind, die in Relation zu einem bestimmten, in deren Folge zu erwartenden Ereignis-Highlight stehen,
- Aus den Ereignissen eines Zeitraums, der von einem aktuellen Zeitpunkt um einen vorbestimmten Zeitraum zurückreicht, Ereignisse ausgewählt werden, deren Ereigniskennung in der Liste enthalten ist,
- Die Anzahl der solcherart ausgewählten Ereigniskennungen innerhalb einer vorbestimmten Zeitdauer durch diese Zeitdauer dividiert wird und
dass dann, wenn der Zukunftsereigniswert einen vorbestimmten Grenzwert überschreitet, eine Filmsequenzauswahl erfolgt, welche den Eintritt des Ereignis-Highlights berücksichtigt.

## Claims

1. Method for preparing film sequences from electronic film source material, comprising the steps of:
a) preparing a list of different types of event identifiers, each type describing a particular event or a particular aspect of an event and the events or aspects of the events being potential activities which may be documented on the film source material,
b) preparing evaluated film source material in which different event identifiers from the list of the types of event identifiers are respectively assigned to correspondingly different events which are depicted on the electronic film source material,
c) saving the assigned event identifiers in a data format which assigns, to each event identifier, a film source material designation of the evaluated film source material and a time specification which assigns to the event identifier in question the time at which the event corresponding to this event identifier is depicted on the film source material,
d) selecting a particular event identifier highlight from the assigned event identifiers, the event identifier highlight corresponding to an event to be displayed in the film sequence to be prepared,
e) applying to the selected event identifier highlight a logical link which
∘ assigns to the event identifier highlight an introduction event identifier type or a selection of introduction event identifier types for an introduction sequence, the introduction event identifier type corresponding to a type of event identifier which identifies a type of event, such as a "penalty" or a "foul in the penalty area", which introduces the event to be displayed, such as a "goal", and/or
∘ assigns to the event identifier highlight a conclusion event identifier type or a selection of conclusion event identifier types for a conclusion sequence, the conclusion event identifier type corresponding to a type of event identifiers which identify an event, such as a "goal celebration" or a "goalkeeper's reaction", which concludes the event to be displayed, such as a "goal",
f) searching backwards in time within the assigned event identifiers, starting from the time of the event identifier highlight, for the event identifier temporally closest beforehand, of the introduction event identifier type, which is assigned to this event identifier highlight, and assigning the event identifier thus found to the event identifier highlight as an introduction event identifier if an introduction event identifier type is assigned to the event identifier highlight,
g) searching forwards in time within the assigned event identifiers, starting from the time of the event identifier highlight, for the event identifier temporally closest afterwards, of the conclusion event identifier type, which is assigned to this event identifier highlight, and assigning the event identifier thus found to the event identifier highlight as a conclusion event identifier if a conclusion event identifier type is assigned to the event identifier highlight, and
h) creating the film sequence to be prepared in that a film sequence, comprising the events assigned to
∘ the introduction event identifier if one was determined,
∘ the event identifier highlight, and
∘ the conclusion event identifier if one was determined
is created from the film source material,
**characterised in that**, for a first film source material, a first event index value is determined **in that**
- a points value is assigned to each event on the basis of the event identifier thereof, and
- the total of the points values of all event identifiers within a predetermined duration is divided by the duration, and
- **in that**, from a second film source material, a second event index value is determined **in that** a points value is assigned to each event on the basis of the event identifier thereof, and the total of the points values of all event identifiers within a predetermined duration of the second film source material is divided by the predetermined duration of the second film source material, and
- **in that**, from the first and the second film source material, on the basis of the first and second event index value determined therefrom, it is determined from which of the first and second film source material a film sequence is created by selecting the one of the first and second film source material which has the higher of the first and second event index value.

2. Method according to claim 1,
**characterised in that** the application of the logical link comprises:
- preparing an assignment table which allocates, to each of a number of possible event identifier highlight types, in each case at least one and preferably a plurality of possible introduction and/or conclusion event identifier types, and
- reading out from the table the introduction and/or conclusion event identifier types correspondingly allocated to the respectively selected event identifier highlight type.

3. Method according to claim 2,
**characterised in that** an assignment table is prepared which
- allocates to each of the number of possible event identifier highlight types the in each case at least one and preferably the plurality of possible introduction and/or conclusion event identifier types in a first allocation level,
- allocates, to one or more of the introduction and/or conclusion event identifier types of the first allocation level, one or preferably a plurality of possible introduction and/or conclusion event identifier types in a second allocation level, and
- optionally, in further allocation levels, allocates, to one or more of the introduction and/or conclusion event identifier types of an n^{th} allocation level, one or preferably a plurality of possible introduction and/or conclusion event identifier types in an n+1^{th} allocation level,
and **in that**, during the forward or backward searching,
- starting from the closest introduction or conclusion event identifier allocated in the first allocation level, the correspondingly closest introduction event identifier beforehand or conclusion event identifier afterwards of the type is searched for and assigned if the discovered introduction or conclusion event identifier is of a type to which an introduction and/or conclusion event identifier type in the second allocation level is allocated in the allocation table, and
- correspondingly, optionally starting from the closest introduction or conclusion event identifier allocated in an n^{th} allocation level, the correspondingly closest introduction event identifier beforehand or conclusion event identifier afterwards of the type is searched for and assigned if the discovered introduction or conclusion event identifier is of a type to which an introduction and/or conclusion event identifier type in the n+1^{th} allocation level is allocated in the allocation table.

4. Method according to any of the preceding claims,
**characterised in that**,
from the film source material, the film sequence to be prepared is created **in that**, starting from an event identifier which corresponds to the selected event identifier highlight type, all events which correspond to the type assigned to this event identifier highlight type in the logical link and which are temporally closest to the event identifier of the selected event identifier highlight type are included, and the film sequence is extended or shortened forwards or backwards to a length of time which corresponds to a predetermined minimum or maximum extent if the events are within this minimum or outside this maximum extent about the event which corresponds to the event identifier highlight type.

5. Method according to any of the preceding claims,
**characterised in that**
- the list of different types of event identifiers describes a particular aspect of an event,
- a logical link of at least two different types of event identifiers is assigned to at least one event,
- the event identifier highlight is selected **in that**
∘ a logical link of a plurality of types of event identifiers is inputted via a user interface, and,
∘ on this basis of this input, an event of which the event identifiers correspond to the logical link is determined.

6. Method according to any of the preceding claims,
**characterised in that**
- a third film source material is prepared, which reproduces events from an observation period, and
- at least one further film source material is prepared, which reproduces events from the same observation period,
- the third and the further film source materials are evaluated by assigning event identifiers and saving the assigned event identifiers with allocation of a film source material designation and time specification,
- event identifiers which correspond to events reproduced on a different film source material also being assigned to a time as part of the evaluation of a film source material, and
- the film sequence to be created being created from the third and further film source material on the basis of the event identifiers selected from the logical link.

7. Method according to any of the preceding claims,
**characterised in that**,
during the creation of film sequences from a live or near-live transmission, a future event index value is determined in that
- a list is prepared in which event identifiers are set out which are related to a particular event highlight to be expected subsequent thereto,
- from the events of a period reaching back a predetermined period from a current time, events are selected of which the event identifier is included in the list,
- the number of event identifiers thus selected within a predetermined duration is divided by this duration, and
**in that** when the future event value exceeds a predetermined threshold a film sequence selection is made which takes into account the occurrence of the event highlight.

## Revendications

1. Procédé servant à fournir des séquences de film à partir de contenu source de film électronique, avec les étapes suivantes :
a) de fourniture d'une liste de différents types d'identification d'événement, dans lequel chaque type décrit un événement défini ou un aspect défini d'un événement et les événements ou les aspects des événements sont des actions optionnelles, qui peuvent être documentées sur le contenu source de film,
b) de fourniture d'un contenu source de film évalué, dans lequel respectivement différentes identifications d'événement issues de la liste des types d'identifications d'événement sont associées de manière correspondante à des événements différents, qui sont illustrés sur le contenu source de film électronique,
c) de sauvegarde des identifications d'événement associées dans un format de fichier, lequel associe, à chaque identification d'événement, une désignation de contenu source de film du contenu source de film évalué et une indication de temps, qui associe à l'identification d'événement respective le moment auquel l'événement correspondant à ladite identification d'événement est illustré sur le contenu source de film,
d) de sélection d'un temps fort d'identification d'événement défini parmi les identifications d'événement associées, dans lequel le temps fort d'identification d'événement correspond à un événement à représenter dans la séquence de film à fournir,
e) d'application d'une combinaison logique sur le temps fort d'identification d'événement sélectionné, laquelle
- associe, au temps fort d'identification d'événement, un type d'identification d'événement d'introduction ou une sélection de types d'identification d'événement d'introduction pour une séquence d'introduction, dans lequel le type d'identification d'événement d'introduction correspond à un type d'identifications d'événement, qui caractérisent un événement tel qu'un « penalty » ou une « faute dans une surface de réparation », lequel introduit l'événement à représenter, tel qu'un « but », et/ou
- associe, au temps fort d'identification d'événement, un type d'identification d'événement de conclusion ou une sélection de type d'identification d'événement de conclusion pour une séquence de conclusion, dans lequel le type d'identification d'événement de conclusion correspond à un type d'identifications d'événement, qui caractérise un événement, tel que « des éclats de joie déclenchés par un but » ou une « réaction d'un gardien de but », lequel conclut l'événement à représenter tel qu'un « but »,
f) de recherche en arrière temporelle à l'intérieur des identifications d'événement associées en partant du moment du temps fort d'identification d'événement après l'identification d'événement qui précède immédiatement dans le temps du type d'identification d'événement d'introduction, laquelle est associée audit temps fort d'identification d'événement et d'association de l'identification d'événement ainsi trouvée en tant qu'identification d'événement d'introduction au temps fort d'identification d'événement dans la mesure où un type d'identification d'événement d'introduction est associé au temps fort d'identification d'événement,
g) de recherche en avant temporelle à l'intérieur des identifications d'événement associées en partant du moment du temps fort d'identification d'événement après l'identification d'événement qui suit immédiatement après dans le temps du type d'identification d'événement de conclusion, laquelle est associée au temps fort d'identification d'événement, et d'association de l'identification d'événement ainsi trouvée en tant qu'identification d'événement de conclusion au temps fort d'identification d'événement dans la mesure où un type d'identification d'événement de conclusion est associé au temps fort d'identification d'événement, et
h) de création de la séquence de film à fournir en ce qu'est créée, à partir du contenu source de film, une séquence de film, laquelle comprend les événements, qui sont associés
- à l'identification d'événement d'introduction dans la mesure où une identification de ce type a été déterminée,
- au temps fort d'identification d'événement, et
- à l'identification d'événement de conclusion dans la mesure où une identification de ce type a été déterminée,
**caractérisé en ce qu'**une première valeur d'indice d'événement est déterminée pour un premier contenu source de film **en ce que**
- une valeur ponctuelle est associée à chaque événement à l'aide de son identification d'événement, et
- la somme des valeurs ponctuelles de toutes les identifications d'événement est divisée pendant une durée prédéfinie par la durée, et
- qu'une deuxième valeur d'indice d'événement est déterminée à partir d'un deuxième contenu source de film **en ce qu'**une valeur ponctuelle est associée à chaque événement à l'aide de son identification d'événement et la somme des valeurs ponctuelles de toutes les identifications d'événement est divisée pendant une durée prédéfinie du deuxième contenu source de film par la durée prédéfinie du deuxième contenu source de film, et
- qu'il est déterminé, à partir du premier et du deuxième contenu source de film à l'aide de la première et de la deuxième valeur d'indice d'événement déterminées sur cette base parmi le premier et le deuxième contenu source de film, celui à partir duquel une séquence de film est créée **en ce que** celui précisément parmi le premier et le deuxième contenu source de film est sélectionné, lequel précisément présente la valeur d'indice d'événement la plus élevée parmi la première et la deuxième valeur d'indice d'événement.

2. Procédé selon la revendication 1,
**caractérisé en ce que** l'application de la combinaison logique comprend :
- la fourniture d'un tableau d'association, lequel attribue, à chacun parmi un nombre donné de types de temps fort d'identification d'événement possibles, respectivement au moins un, de préférence plusieurs types d'identification d'événement d'introduction et/ou de conclusion possibles, et
- la lecture depuis le tableau des types d'identification d'événement d'introduction et/ou de conclusion attribués de manière correspondante au type de temps fort d'identification d'événement respectivement sélectionné.

3. Procédé selon la revendication 2,
**caractérisé en ce qu'**un tableau d'association est fourni, qui
- attribue, à chacun du nombre de types de temps fort d'identification d'événement possibles, le respectivement au moins un, de préférence les nombreux types d'identification d'événement d'introduction et/ou de conclusion possibles dans un premier niveau d'attribution,
- attribue, à un ou plusieurs des types d'identification d'événement d'introduction et/ou de conclusion du premier niveau d'attribution, un de préférence plusieurs types d'identification d'événement d'introduction et/ou de conclusion dans un deuxième niveau d'attribution, et
- éventuellement attribue, dans d'autres niveaux d'attribution, à un ou à plusieurs des types d'identification d'événement d'introduction et/ou de conclusion d'un n^{ème} niveau d'attribution un, de préférence plusieurs types d'identification d'événement d'introduction et/ou de conclusion possibles dans un n^{+1ème} niveau d'attribution
et que, lors de la recherche en avant ou en arrière,
- en partant de l'identification d'événement d'introduction ou de conclusion la plus proche, attribuée dans le premier niveau d'attribution, l'identification d'événement d'introduction ou de conclusion située immédiatement avant ou après de manière correspondante du type est cherchée et associée quand l'identification d'événement d'introduction ou de conclusion trouvée est d'un type, auquel, dans le tableau d'association, un type d'identification d'événement d'introduction et/ou de conclusion est attribué dans le deuxième niveau d'attribution, et
- de manière correspondante, éventuellement, en partant de l'identification d'événement d'introduction ou de conclusion la plus proche attribuée dans un n^{ème} niveau d'attribution, l'identification d'événement d'introduction ou de conclusion située de manière correspondante immédiatement avant ou après du type est cherchée et associée quand l'identification d'événement d'introduction ou de conclusion trouvée est d'un type, auquel, dans le tableau d'association, un type d'identification d'événement d'introduction et/ou de conclusion est attribué dans le n^{+1ème} niveau d'attribution.

4. Procédé selon l'une quelconque des revendications précédentes,
**caractérisé en ce que**
la séquence de film à fournir est créée à partir du contenu source de film **en ce qu'**en partant d'une identification d'événement, qui correspond au type de temps fort d'identification d'événement sélectionné, tous les événements, qui correspondent au type, qui est associé, dans la combinaison logique, audit type de temps fort d'identification d'événement, et qui suivent immédiatement dans le temps par rapport à l'identification d'événement du type de temps fort d'identification d'événement sélectionné, sont intégrés et la séquence de film est étendue ou raccourcie vers l'avant ou l'arrière sur une longueur de temps, qui correspond à une dimension minimale ou maximale prédéfinie quand les événements se situent dans le cadre de ladite dimension minimale ou en dehors de ladite dimension maximale autour de l'événement, lequel correspond au type de temps fort d'identification d'événement.

5. Procédé selon l'une quelconque des revendications précédentes,
**caractérisé en ce que**
- la liste de différents types d'identifications d'événement décrit un aspect défini d'un événement,
- une combinaison logique d'au moins deux types différents d'identifications d'événement est associée à au moins un événement,
- le temps fort d'identification d'événement est sélectionné **en ce que**
- une combinaison logique de plusieurs types d'identifications d'événements est saisie par l'intermédiaire d'une interface d'utilisateur et
- un événement est déterminé à l'aide de ladite entrée, dont les identifications d'événement correspondent à la combinaison logique.

6. Procédé selon l'une quelconque des revendications précédentes,
**caractérisé en ce que**
- un troisième contenu source de film est fourni, lequel reproduit des événements issus d'une période d'observation, et
- au moins un autre contenu source de film est fourni, lequel reproduit des événements issus de la même période d'observation,
- le troisième et les autres contenus sources de film sont évalués par l'association d'identifications d'événement et la sauvegarde des identifications d'événement associées avec attribution d'une désignation de contenu source de film et indication de temps,
- dans lequel, lors de l'évaluation d'un contenu source de film, des identifications d'événement sont également associées à un moment, lesquelles correspondent à des événements, qui sont reproduits sur un autre contenu source de film, et
- la séquence de film à créer est créée à partir du troisième et de l'autre contenu source de film à l'aide des identifications d'événement sélectionnées à partir de la combinaison logique.

7. Procédé selon l'une quelconque des revendications précédentes,
**caractérisé en ce que**
lors de la création de séquences de film à partir d'une transmission en live ou quasi en live, une valeur d'indice d'événement futur est déterminée **en ce que**
- une liste est fournie, dans laquelle sont répertoriées des identifications d'événement, qui sont en lien avec un temps fort d'événement défini, attendu à la suite de celle-ci,
- parmi les événements d'une période, qui remonte depuis un moment instantané d'une période prédéfinie, des événements sont sélectionnés dont l'identification d'événement figure dans la liste,
- le nombre des identifications d'événement ainsi sélectionnées est divisé dans le cadre d'une durée prédéfinie par ladite durée et
qu'alors, quand la valeur d'événement futur dépasse une valeur limite prédéfinie, une sélection de séquence de film est effectuée, laquelle tient compte de l'entrée du temps fort d'événement.
